# EUROPÄISCHE PATENTSCHRIFT

(11) **EP 1 192 337 B1**
(45) Veröffentlichungstag und Bekanntmachung des Hinweises auf die Patenterteilung: **09.02.2005**
(21) Anmeldenummer: 00925066.3
(22) Anmeldetag: 03.04.2000
(51) Int. Cl.: F01N 3/20, F01N 3/36

(54) **VENTILAUFNAHMEVORRICHTUNG FÜR EIN DOSIERVENTIL EINER ABGASNACHBEHANDLUNGSANLAGE**
VALVE SEAT DEVICE FOR A METERING VALVE OF AN EXHAUST TREATMENT STATION
DISPOSITIF DE LOGEMENT POUR UNE SOUPAPE DE DOSAGE D'UNE INSTALLATION DE TRAITEMENT DE GAZ BRULES

(30) Priorität: 28.04.1999 DE 19919426
(43) Veröffentlichungstag der Anmeldung: 03.04.2002
(73) Patentinhaber: Argillon GmbH, 96257 Redwitz (DE)
(72) Erfinder: WISSLER, Gerhard, D-93104 Sünching (DE); WEIGL, Manfred, D-93161 Viehhausen (DE)
(74) Vertreter: Tergau & Pohl Patentanwälte
(86) Internationale Anmeldenummer: PCT/DE2000/000999
(87) Internationale Veröffentlichungsnummer: WO 2000/066885

(56) Entgegenhaltungen:
- Keine einschlägigen Dokumente gefunden

## Beschreibung

Die Erfindung betrifft eine Ventilaufnahmevorrichtung für ein Dosierventil einer Abgasnachbehandlungsanlage gemäß dem Oberbegriff des Anspruches 1.

Diesel-Brennkraftmaschinen und magerbetriebene Otto-Brennkraftmaschinen, bei denen Kraftstoff unmittelbar in den Brennraum im Zylinder eingespritzt wird, neigen wegen des hohen Sauerstoffüberschusses, mit denen sie betrieben werden, zu hohen NOₓ-Emissionen. Zur Verringerung des NOₓ-Gehaltes im Abgas solcher Brennkraftmaschinen ist das sogenannte Selectiv-Catalytic-Reduction (SCR)-Verfahren bekannt. Dabei wird an einer Stelle stromaufwärts eines Reduktionskatalysators mit Hilfe einer elektrisch angesteuerten Dosiereinrichtung ein Reduktionsmittel in den Abgasstrom eingebracht, das die im Abgas enthaltenen Stickoxide in Anwesenheit von Sauerstoff am Reduktionskatalysator zu unschädlichem Stickstoff N₂ und Wasser H₂O umsetzt. Ein solches Verfahren ist beispielsweise in der Veröffentlichung "Ein geregeltes Abgasnachbehandlungssystem zur Erfüllung zukünftiger Emissionsgrenzwerte bei Pkw-Dieselmotoren" von Schöppe et al, 17. Internat. Wiener Motorensymposium, 1996, Bd.1, beschrieben. Als Reduktionsmittel kann Ammoniak NH₃ dienen, aus Gründen der Handhabbarkeit wird üblicherweise eine wässrige Harnstofflösung eingesetzt. Es ist aber auch möglich, Kraftstoff oder Derivate als Reduktionsmittel zu verwenden.

Bei solchen Abgasnachbehandlungssystemen wird von einem Steuergerät der Brennkraftmaschine oder von einem gesonderten Steuergerät, vielfach als Dosiersteuergerät oder DENOₓ-Steuergerät bezeichnet, fortlaufend die Sollmenge des zu dosierenden Reduktionsmittels auf der Grundlage von Betriebsparametern der Brennkraftmaschine, wie beispielsweise die in den Brennraum eingebrachte Kraftstoffmenge, Betriebstemperatur und Drehzahl, sowie der Temperatur des Reduktionskatalysators berechnet.

Als Dosiereinrichtung dient dabei vorzugsweise ein herkömmliches Einspritzventil, wie es beispielsweise bei einer Niederdruck-Benzineinspritzanlage Verwendung findet. Entsprechend dem geänderten Verwendungszweck eines solchen Einspritzventils (Dosierventils), nämlich Reduktionsmittel, z.B. wässrige Harnstofflösung einzuspritzen, sind zumindest die unmittelbar der Harnstofflösung ausgesetzten Komponenten des Ventils aus harnstoffresistenten Materialien (Edelstahl, beschichtetes Metall, Kunststoff) gefertigt und die Geometrie der Austrittsöffnung des Ventils ist den gegenüber den bei Kraftstoffzumessung kleineren auszustoßenden Mengen angepaßt.

Da in solchen SCR- Systemen das Reduktionsmittel direkt in das Abgas eingebracht wird, wird das Dosierventil mit einer geeigneten Aufnahmevorrichtung oder Adapter derart am Abgasrohr befestigt, daß der Flüssigkeitsstrahl in den heissen Abgasstrom eindringt und verdampft. Dabei soll vermieden werden, daß Flüssigkeit die Wandung des Adapters oder des Abgasrohres benetzt, da dies in bestimmten Temperaturbereichen zu Ablagerungen führen kann.

Die Abgastemperaturen können unter ungünstigen Bedingungen am Ort des Dosierventils mehr als 500°C erreichen, was negative Einflüsse auf das einzubringende Reduktionsmittel und auch auf das Dosierventil selbst nachziehen kann.

Der Einsatz von herkömmlichen Niederdruck-Benzineinspritzventilen ist in der Regel nur bis zu einer bestimmten Temperatur, typisch ca. 130°C zulässig. Dies ist begründet in der Spulenkonstruktion, insbesondere der Isolierung der Spulen für den elektromagnetischen Antrieb und der thermischen Festigkeiten der verwendeten Materialien, z.B. der Dichtungen.

Wird das Einspritzventil oder zumindest Teile davon aber für längere Zeit über diese maximal zulässige Temperatur erwärmt, so kommt es zu Funktionsstörungen bis zum vollständigen Ausfall des Einspritzventils.

Im Falle der Verwendung von wässriger Harnstofflösung als Reduktionsmittel darf diese nicht längere Zeit über bestimmte Temperaturgrenzen (typische Obergrenze ca. 70°C) erwärmt werden, da der Harnstoff oberhalb dieser kritischen Temperatur beginnt, sich in andere chemische Verbindungen umzusetzen und eine effek-tive Abgasnachbehandlung nicht mehr gewährleistet ist.

Der das Dosierventil aufnehmende Adapter muß also einen hohen Temperaturgradienten zwischen Abgasrohr und Dosierventil ermöglichen, so daß trotz des Ventilseinbau am heißen Abgasrohr eine möglichst effiziente Kühlung realisiert werden kann.

In der DE 44 36 397 A1 ist zum Einbringen eines Reduktionsmittels in das dem Reduktionskatalysator zugeführten Abgas ein elektrisch gesteuertes Dosierventil vorgesehen, das in einem gemeinsamen Gehäuse mit einem Steuerventil kombiniert ist. Das Steuerventil dient der gesteuerten Einbringung von zugeführter Druckluft, in der eine über das Dosierventil vorgelagerte Menge von Reduktionsmittel aufbereitet, intermittierend in das Abgas eingegeben wird. Das Steuerventil und das Dosierventil sind in einem gemeinsamen Trägerkörper angeordnet, der von Kühlwasser aus dem Kühlwasserkreislauf der Brennkraftmaschine umströmt wird. Durch eine solche Ausgestaltung kann zwar die Maximaltemperatur an der Stirnseite der Einspritzventilaufnahme auf die Kühlwassertemperatur begrenzt (max. 90°-100°C) und die Temperaturbeanspruchung des Harnstoffkreislaufes entlastet werden, es sind aber zusätzlich ein Kühlmantel,-Leitungen und Schlauchverbindungen nötig.

In der DE 38 24 954 A1 ist eine Reinigungsanlage für die Abgase einer Brennkraftmaschine mit in einem Gehäuse angeordneten Katalysator, einer Abgasleitung zwischen der Brennkraftmaschine und dem Katalysator beschrieben, bei der ein Wärmerohr dessen Verdampfungszone den dem Katalysator zugeführten Abgasen Wärme entzieht und diese über eine in einer Umgebung mit niedriger Temperatur liegende Konden-sationszone abgibt. Die Verdampfungszone des ungeregelten Wärmerohres ist dabei in der Abgasleitung stromauf des Katalysatorgehäuses angeordnet.

Der Erfindung liegt deshalb die Aufgabe zugrunde, eine einfach aufgebaute Aufnahmevorrichtung für ein Dosierventil _einer Abgasnachbehandlunganlage für eine mit Luftüberschuß betriebene Brennkraftmaschine der eingangs genannten Art anzugeben, bei der die thermische Belastung des Dosierventils und des Reduktionsmittels möglichst gering ist.

Diese Aufgabe wird durch die Merkmale des Patentanspruches 1 gelöst.

Durch die Verwendung eines ungeregelten Wärmerohres, auch als heat pipe bezeichnet, in der Ventilaufnahmevorrichtung zum Transport der vom Abgas auf das Dosierventil einwirkenden Abwärme zu einer Kondensationszone, die in einer Umgebung niedrigerer Temperatur liegt, ist es auf einfache Weise möglich, das Dosierventil zu kühlen und einer chemischen Veränderung des Reduktionsmittels aufgrund der hohen Temperaturen vorzubeugen.

Ein Hohlraum in der Ventilaufnahmevorrichtung, der als Kühlring die Dosierventilspitze umfasst und der mit einer Flüssigkeit gefüllt ist, steht in Fließverbindung mit einer Wärmesenke, z.B. einem Kühlkörper, der zur Vergrößerung der Oberfläche und damit zur Erhöhung der Kühlwirkung mit Rippen versehen ist.

Eine solche Anordnung hat den Vorteil, daß kein separater Kühlmittelkreislauf oder Komponenten für eine aktive Kühlung (Gebläse, Kühlmittelpumpe), einschließlich elektrischer oder hydraulische Elemente notwendig sind. Sie weist keinerlei beweglichen Teile auf, ist völlig wartungsfrei und kann aufgrund seiner Einfachheit kostengünstig eingesetzt werden Die Wärmesenke kann problemlos in das Fahrzeug integriert werden, da die Form weitgehend frei den Einbaubedingungen angepaßt werden und nur eine relativ kleine Wärmemenge pro Zeiteinheit abgeführt werden muß.

Eine besonders effiziente Kühlung des Dosierventils ergibt sich, wenn die Wärmesenke als Kühlkörper ausgebildet ist, der an einer Stelle im Fahrzeug angeordnet ist, die entweder vom Fahrtwind oder vom Luftstrom des Kühlerlüfters angeströmt wird.

Zur Erhöhung der Kühlleistung können auch mehrere Wärmerohre an der Ventilaufnahmevorrichtung vorgesehen werden, die entweder alle mit einem gemeinsamen Kühlkörper verbunden sind, oder es ist jedem Wärmerohr ein eigener Kühlkörper zugeordnet.

Durch die Anwendung des heat pipe-Prinzips ergibt sich insgesamt eine sehr einfach aufgebaute und kostengünstige Möglichkeit der Kühlung des Dosierventils. Das Reduktionsmittel wird nicht mehr über die kritische Temperatur erhöht und es findet somit keine thermische Zersetzung des Reduktionsmittels statt.

Weitere vorteilhafte Ausgestaltungen der Erfindung werden nachfolgend unter Bezugnahme auf die Zeichnung näher erläutert. Es zeigen:
- Figur 1: eine Blockdarstellung einer Brennkraftmaschine mit zugehöriger Abgasnachbehandlungsanlage, bei der die erfindungsgemäße Aufnahmevorrichtung eingesetzt wird und
- Figur 2: eine schematische Darstellung eines Ausführungsbeispieles der erfindungsgemäßen Aufnahmevorrichtung.

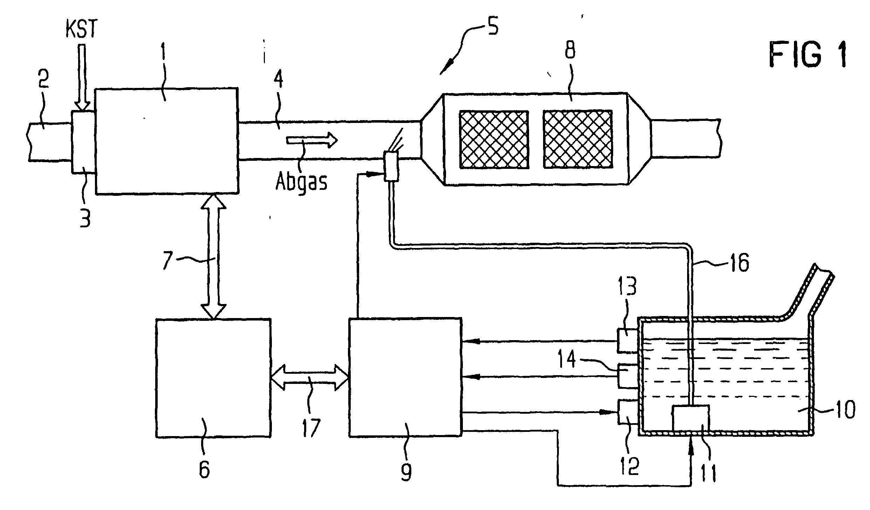

In Figur 1 ist in Form eines Blockschaltbildes sehr vereinfacht eine mit Luftüberschuß betriebene Brennkraftmaschine mit einer ihr zugeordneten Abgasnachbehandlungsanlage gezeigt. Dabei sind nur diejenigen Teile dargestellt, die für das Verständnis der Erfindung notwendig sind. Insbesondere ist auf die Darstellung des Kraftstoffkreislaufes verzichtet worden. In diesem Ausführungsbeispiel ist als Brennkraftmaschine eine Dieselbrennkraftmaschine gezeigt und als Reduktionsmittel zum Nachbehandeln des Abgases wird wässrige Harnstofflösung verwendet.

Der Brennkraftmaschine 1 wird über eine Ansaugleitung 2 die zur Verbrennung notwendige Luft zugeführt. Eine Einspritzanlage, die beispielsweise als Hochdruckspeichereinspritzanlage (Common rail) mit Einspritzventilen ausgebildet sein kann, die Kraftstoff KST direkt in die Zylinder der Brennkraftmaschine 1 einspritzen, ist mit dem Bezugszeichen 3 bezeichnet. Das Abgas der Brennkraftmaschine 1 strömt über eine Abgasleitung 4 zu einer Abgasnachbehandlungsanlage 5 und von diesem über einen nicht dargestellten Schalldämpfer ins Freie.

Zur Steuerung und Regelung der Brennkraftmaschine 1 ist ein an sich bekanntes Motorsteuergerät 6 über eine hier nur schematisch dargestellte Daten - und Steuerleitung 7 mit der Brennkraftmaschine 1 verbunden. Über diese Daten - und Steuerleitung 7 werden Signale von Sensoren (z.B. Temperatursensoren für Ansaugluft, Ladeluft, Kühlmittel, Lastsensor, Geschwindigkeitssensor) und Signale für Aktoren (z.B. Einspritzventile, Stellglieder) zwischen der Brennkraftmaschine 1 und dem Motorsteuergerät 6 übertragen.

Die Abgasnachbehandlungsanlage 5 weist einen Reduktionskatalysator 8 auf, der mehrere in Reihe geschaltete Katalysatoreinheiten 81,82 beinhaltet. Stromabwärts und/oder stromaufwärts des Reduktionskatalysators 8 kann zusätzlich je ein Oxidationskatalysator angeordnet sein. Ferner ist ein Dosiersteuergerät 9 vorgesehen, das einem Reduktionsmittelvorratsbehälter 10 mit einer elektrisch ansteuerbaren Förderpumpe 11 für das Reduktionsmittel zugeordnet ist.

Als Reduktionsmittel dient in diesem Ausführungsbeispiel wässrige Harnstofflösung, die in dem Reduktionsmittelvorratsbehälter 10 gespeichert ist. Dieser weist eine elektrische Heizeinrichtung 12 und Sensoren 13,14 auf, welche die Temperatur der Harnstofflösung bzw. den Füllstand im Reduktionsmittelvorratsbehälter 10 erfassen. An das Dosiersteuergerät 9 werden außerdem noch die Signale eines stromaufwärts des Reduktionskatalysators 8 angeordneten Temperatursensors und eines stromabwärts des Reduktionskatalysators 8 angeordneten Abgasmeßaufnehmers, z.B. eines NOₓ-Sensors übergeben (nicht dargestellt).

Das Dosiersteuergerät 9 steuert ein elektromagnetisches Dosierventil 15 an, dem bedarfsweise über eine Leitung 16 Harnstofflösung mit Hilfe der Förderpumpe 11 aus dem Reduktionsmittelvorratsbehälter 10 zugeführt wird. Die Einspritzung der Harnstofflösung mittels des Dosierventiles 15 erfolgt in die Abgasleitung 4 stromaufwärts des Reduktionskatalysators 8.

Im Betrieb der Brennkraftmaschine 1 strömt das Abgas in der eingezeichneten Pfeilrichtung durch die Abgasleitung 4.

Das Dosiersteuergerät 9 ist zum gegenseitigen Datentransfer über ein elektrisches Bussystem 17 mit dem Motorsteuergerät 6 verbunden. Über das Bussystem 17 werden die zur Berechnung der zu dosierenden Menge an Harnstofflösung relevanten Betriebsparameter, wie z.B. Maschinendrehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät 9 übergeben.

Ausgehend von diesen Parametern und den Meßwerten für die Abgastemperatur und dem NOₓ-Gehalt berechnet das Dosiersteuergerät 9 die einzuspritzende Menge an Harnstofflösung und gibt über eine elektrische Verbindungsleitung 18 ein entsprechendes elektrisches Signal an das Dosierventil 15 ab. Durch die Einspritzung in die Abgasleitung 4 wird der Harnstoff hydrolysiert und durchmischt. In den Katalysatoreinheiten 81 und 82 erfolgt die katalytische Reduktion des NOₓ im Abgas zu N₂ und H₂O.

Als Dosierventil 15 zum Einbringen der Harnstofflösung in die Abgasleitung 4 dient in der Regel ein übliches Niederdruck-Benzineinspritzventil, das in eine mit einer Wandung der Abgasleitung 4 fest verbundene Ventilaufnahmevorrichtung lösbar befestigt ist.

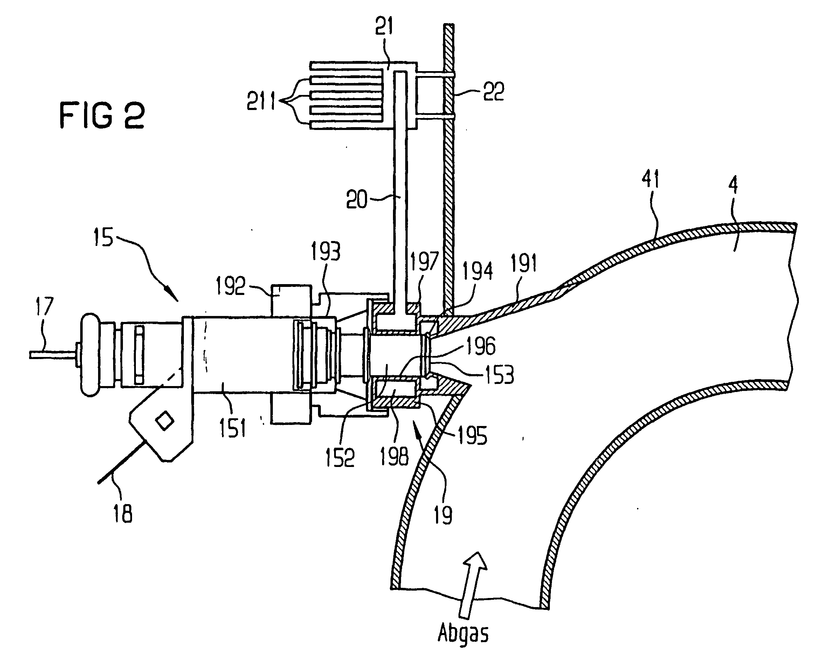

In Figur 2 ist ein solches Dosierventil 15 einschließlich der Ventilaufnahmevorrichtung 19 näher dargestellt, wobei das Dosierventil 15 ungeschnitten und die Ventilaufnahmevorrichtung 19 teilweise geschnitten gezeigt ist. Diese Ventilaufnahmevorrichtung 19-ist über eine Außenwandung 191 fest mit der Wandung 41 der Abgasleitung 4 verbunden, im Falle einer metallischen Ventilaufnahmevorrichtung 19 z.B. mit dieser verschweißt. Alternativ hierzu kann die Ventilaufnahmevorrichtung 19 aus Keramik und/oder zumindest die vom Abgasrohr abgewandten Teile davon aus temperaturfestem Kunststoff bestehen. Das verwendete Material soll einerseits ein schlechter Wärmeleiter sein, damit möglichst wenig Wärme vom Abgas und der Abgasleitung 4 auf das Dosierventil 15 übergeht und andererseits eine genügend hohe mechanische Festigkeit aufweisen, um das Dosierventil 15 aufzunehmen und auch im Betrieb der Brennkraftmaschine 1 sicher zu halten.

Das Dosierventil 15 wird in die Ventilaufnahmevorrichtung 19 eingesteckt und mittels einer geeigneten Verschraubung oder Klemmvorrichtung 192 sicher gehalten, so daß das Dosierventil 15 in radialer und axialer Richtung zentriert ist.

Die Ventilaufnahmevorrichtung 19 weist hierzu an seiner der Abgasleitung 4 abgewandten Seite eine dem Durchmesser des Dosierventilkörpers 151 angepaßte Ausnehmung 193 auf, so daß in eingestecktem Zustand die Dosierventilspitze 152 mit seiner Austrittsöffnung 153 kurz vor oder in Höhe der mit einer Durchtrittsöffnung für die Harnstofflösung versehenen Wandung 41 der Abgasleitung 4 liegt. Die Dosierventilspitze 152 dichtet dabei an einem in der Ventilaufnahmevorrichtung 19 angeformten Konus 194 zum Abgas hin ab.

Zur Ableitung der vom Abgas ausgehenden Wärme und damit zur Kühlung des Dosierventils 15 ist derjenige Teil der Ventilaufnahmevorrichtung 19, der die Dosierventilspitze 152 umfasst, als Wärmetauschergehäuse ausgebildet. Hierzu ist ein, durch eine äußere Wandung 195 und eine innere Wandung 196 begrenzter Kühlring 197 vorgesehen, wobei die innere Wandung 196 in unmittelbarem räumlichen Kontakt mit der Oberfläche der Dosierventilspitze 152 steht und somit eine Wärmetauschwand bildet, während der Hohlraum 198 des Kühlringes 197 mit einem flüssigen Medium gefüllt ist.

Zum Erzielen eines verbesserten Wärmeüberganges zwischen Dosierventilspitze 152 und Kühlring 197 kann auch eine Zwischenlage, z.B. eine Folie eingebracht sein.

Ein Wärmerohr 20 (heat pipe) steht einerseits in Fließverbindung mit dem Hohlraum 198 des Kühlringes 197 und endet anderseits in einem Kühlkörper 21, der räumlich entfernt von dem Dosierventil 15 und der Abgasleitung 4 innerhalb des mit der Brennkraftmaschine angetriebenen Fahrzeuges angeordnet ist. Der Kühlkörper 21 ist beispielsweise an einem Abschirmblech 22 befestigt, das fest mit der Ventilaufnahmevorrichtung 19 oder mit der Abgasleitung 4 verbunden ist und die Strahlungswärme der heissen Abgasleitung 4 sowohl von dem Wärmerohr 20, als auch von dem Kühlkörper 21 fernhält. Darüberhinaus ist dadurch sichergestellt, daß die Ventilaufnahmevorrichtung 19, das Wärmerohr 20, der Kühlkörper 21 und das Abgasrohr 4 ein gegenüber der Fahrzeugkarosserie federnd aufgehängtes, schwingungsfähigen Gebilde bilden.

Zur Vergrößerung der Oberfläche und damit zur besseren Kühlung weist der Kühlkörper 21 mehrere Kühlrippen oder Kühlfahnen 211 auf. Zur Steigerung der Kühlwirkung ist es auch möglich, den Kühlkörper 21 an einer Stelle im Fahrzeug anzuordnen, an der er entweder von dem Fahrtwind oder zumindest teilweise vom Luftstrom eines zur Kühlung der Brennkraftmaschine 1 vorhandenen Lüfters angeströmt wird.

Darüberhinaus ist es auch möglich, mehrere vorzugsweise zueinander parallele Wärmerohre 20 vorzusehen, die alle mit dem Kühlring 197 verbunden sind und entweder in einen gemeinsamen oder entsprechend der Anzahl der Wärmerohre 20 in mehrere Kühlkörper 21 münden.

Wird als Reduktionsmittel wässrige Harnstofflösung verwendet, so wird als Flüssigkeit für das Wärmerohr 20 ein Kühlmedium gewählt, welches bei ca. 60°C und dem sich bei dieser Temperatur einstellenden Druck mit hoher Verdampfungswärme siedet. Durch den Siedevorgang und der dafür verbrauchten Verdampfungswärme wird der Kühlring 197 um die Dosierventilspitze 152 sehr effizient gekühlt. Das verdampfte Kühlmedium kondensiert unter Abgabe der Verdampfungswärme im Wärmerohr 20, das in dem Kühlkörper 21 steckt und fließt zurück in den Kühlring 197 in der Ventilaufnahmevorrichtung.

Aufgrund der thermischen Eigenschaften ist Wasser als Kühlmedium sehr gut geeignet, da der Siedepunkt bei einem Druck von ca. 0,2 bar in diesem Temperaturbereich liegt und Wasser eine relativ hohe Verdunstungsswärme aufweist.

## Patentansprüche

1. Ventilaufnahmevorrichtung zur Aufnahme eines, zum gesteuerten Einbringen von flüssigem Reduktionsmittel in das Abgas einer Brennkraftmaschine stromaufwärts eines Reduktionskatalysators dienenden Dosierventils, wobei die Ventilaufnahmevorrichtung eine Einrichtung zur Kühlung des Dosierventils aufweist,
**dadurch gekennzeichnet, daß**
- die Ventilaufnahmevorrichtung (19) mindestens ein mit Flüssigkeit gefülltes, ungeregeltes Wärmerohr (20) mit einer Verdampfungszone und einer Kondensationszone beinhaltet,
- die Verdampfungszone dem Dosierventil (15) an dessen das Reduktionsmittel ausstoßenden Ende (152) die vom Abgas zugeführte Wärme entzieht und das die Wärme an einen, vom Dosierventil (20) beabstandeten, in einer Umgebung niedrigerer Temperatur liegenden Kühlkörper (21) durch Kondensation abgibt.

2. Vorrichtung nach Anspruch 1, **dadurch gekennzeichnet, daß**
- die Ventilaufnahmevorrichtung (19) einen, durch eine äußere und innere Wandung (195,196) gebildeten Hohlraum (198) aufweist,
- die innere Wandung (195) zumindest einen Teil des Dosierventils (15) umschließt, so daß eine Wärmetauschwand gebildet ist,
- der Hohlraum (198) mit einer Flüssigkeit gefüllt ist und über das Wärmerohr (20) in Fließverbindung mit dem Kühlkörper (21) steht.

3. Vorrichtung nach Anspruch 1 oder 2, **dadurch gekennzeichnet, daß** mehrere Wärmerohre (20) vorgesehen sind, die eine gemeinsame Verdampfungszone aufweisen und alle mit demselben Kühlkörper (21) verbunden sind.

4. Vorrichtung nach Anspruch 1 oder 2, **dadurch gekennzeichnet, daß** mehrere Wärmerohre (20) vorgesehen sind, und jedem Wärmerohr (20) ein eigener Kühlkörper (21) zugeordnet ist.

5. Vorrichtung nach einem der vorhergehenden Ansprüche, **dadurch gekennzeichnet, daß** der Kühlkörper (21) an einer Stelle angeordnet ist, an der seine Oberfläche von dem Fahrtwind eines mit der Brennkraftmaschine ausgestatteten Fahrzeugs oder zumindest teilweise vom Luftstrom eines die Brennkraftmaschine kühlenden Lüfters angeströmt wird.

6. Vorrichtung nach Anspruch 1 oder 2, **dadurch gekennzeichnet, daß** das Wärmerohr (20) mit einer Flüssigkeit gefüllt ist, deren Siedepunkt etwas unterhalb der kritischen Temperatur des mit dem Dosierventil (15) einzubringenden Reduktionsmittels liegt.

7. Vorrichtung nach Anspruch 1 oder 6, **dadurch gekennzeichnet, daß** das Wärmerohr (20) mit Wasser gefüllt ist.

8. Vorrichtung nach Anspruch 1 oder 2, **dadurch gekennzeichnet, daß** die Verdampfungszone als Kühlring (197) ausgebildet ist, der die Dosierventilspitze (152) unmittelbar umfasst.

9. Vorrichtung nach Anspruch 1 oder 2, **dadurch gekennzeichnet, daß** die Verdampfungszone als Kühlring (197) ausgebildet ist und zwischen dem Kühlring (197) und der Dosierventilspitze (152) ein den Wärmeübergang zwischen diesen Teilen verbessernde Zwischenlage eingebracht ist.

10. Vorrichtung nach Anspruch 1 oder 2, **dadurch gekennzeichnet, daß** der Kühlkörper (21) an einem Abschirmblech (23) montiert ist, das ihn gegen die Strahlungswärme der heissen Abgasleitung (4) abschirmt.

11. Vorrichtung nach Anspruch 1 oder 2, **dadurch gekennzeichnet, daß** das Dosierventil (15) in der Ventilaufnahmevorrichtung (19) mittels einer Klemmvorrichtung gehalten wird, so daß eine Verschiebung in axialer und radialer Richtung verhindert wird.

12. Vorrichtung nach Anspruch 1 oder 2, **dadurch gekennzeichnet, daß** das Dosierventil (15) in der Ventilaufnahmevorrichtung (19) mittels einer Verschraubung gehalten wird, so daß eine Verschiebung in-axialer und radialer Richtung verhindert wird.

13. Vorrichtung nach Anspruch 1 oder 2, **dadurch gekennzeichnet, daß** die Ventilaufnahmevorrichtung (19) aus metallischen Werkstoffen besteht.

14. Vorrichtung nach Anspruch 1, **dadurch gekennzeichnet, daß** die Ventilaufnahmevorrichtung (19) aus keramischem Werkstoff besteht.

15. Vorrichtung nach Anspruch 1, **dadurch gekennzeichnet, daß** die Ventilaufnahmevorrichtung (19) zumindest teilweise aus temperaturbeständigem Kunststoffmaterial besteht.

## Claims

1. Valve seat device for receiving a metering valve which is used for the controlled introduction of liquid reducing agent into the exhaust gas from an internal-combustion engine upstream of a reduction catalytic converter, the valve seat device having a device for cooling the metering valve, **characterized in that**
- the valve seat device (19) includes at least one uncontrolled heat pipe (20) which is filled with liquid and has an evaporation zone and a condensation zone,
- the evaporation zone extracts the heat supplied by the exhaust gas from the metering valve (15) at its end (152) which expels the reducing agent and releases the heat by condensation to a cooling body (21) which is at a distance from the metering valve (20) and lies in an environment which is at a lower temperature.

2. Device according to Claim 1, **characterized in that**
- the valve seat device (19) has a cavity (198) which is formed by an outer wall (195) and an inner wall (196),
- the inner wall (196) surrounds at least part of the metering valve (15), so that a heat-exchange wall is formed,
- the cavity (198) is filled with a liquid and, via the heat pipe (20), is in flow communication with the cooling body (21).

3. Device according to Claim 1 or 2, **characterized in that** a plurality of heat pipes (20) are provided, which have a common evaporation zone and are all connected to the same cooling body (21).

4. Device according to Claim 1 or 2, **characterized in that** a plurality of heat pipes (20) are provided, and each heat pipe (20) is assigned a dedicated cooling body (21).

5. Device according to one of the preceding Claims, **characterized in that** the cooling body (21) is arranged at a location at which the slipstream of a vehicle equipped with the internal-combustion engine or at least part of the air stream of a fan which cools the internal-combustion engine flows onto its surface.

6. Device according to Claim 1 or 2, **characterized in that** the heat pipe (20) is filled with a liquid, the boiling point of which is slightly below the critical temperature of the reducing agent which is to be introduced using the metering valve (15).

7. Device according to Claim 1 or 6, **characterized in that** the heat pipe (20) is filled with water.

8. Device according to Claim 1 or 2, **characterized in that** the evaporation zone is designed as a cooling ring (197) which directly surrounds the metering-valve tip (152).

9. Device according to Claim 1 or 2, **characterized in that** the evaporation zone is designed as a cooling ring (197) and an interlayer, which improves the heat transfer between the cooling ring (197) and the metering-valve tip (152), is introduced between these parts.

10. Device according to Claim 1 or 2, **characterized in that** the cooling body (21) is mounted on a shielding plate (23) which shields it from the radiant heat of the hot exhaust-gas line (4).

11. Device according to Claim 1 or 2, **characterized in that** the metering valve (15) is held in the valve seat device (19) by means of a clamping device, so that displacement in the axial and radial directions is prevented.

12. Device according to Claim 1 or 2, **characterized in that** the metering valve (15) is held in the valve seat device (19) by means of a screw connection, so that displacement in the axial and radial directions is prevented.

13. Device according to Claim 1 or 2, **characterized in that** the valve seat device (19) consists of metallic materials.

14. Device according to Claim 1, **characterized in that** the valve seat device (19) consists of ceramic material.

15. Device according to Claim 1, **characterized in that** the valve seat device (19) at least partially comprises heat-resistant plastic material.

## Revendications

1. Dispositif de logement de soupape pour loger une soupape de dosage servant à l'apport commandé d'agent de réduction liquide dans les gaz d'échappement d'une machine à combustion interne en amont d'un catalyseur de réduction, ledit dispositif présentant un moyen pour le refroidissement de la soupape de dosage, **caractérisé en ce que** :
- le dispositif de logement de soupape (19) contient au moins un tube de chauffe (20) rempli de liquide et non régulé présentant une zone d'évaporation et une zone de condensation ;
- la zone d'évaporation prélève depuis la soupape de dosage (15) la chaleur apportée par les gaz d'échappement à l'extrémité (152) de cette soupape qui éjecte l'agent de réduction, et transmet la chaleur par condensation à un corps de refroidissement (21) placé à distance de la soupape de dosage (15) et se trouvant dans un environnement à plus basse température.

2. Dispositif selon la revendication 1, **caractérisé en ce que** :
- le dispositif de logement de soupape (19) présente une cavité (198) formée par une paroi extérieure et par une paroi intérieure (195, 196) ;
- la paroi intérieure (195) entoure au moins une partie de la soupape de dosage (15) de manière à réaliser une paroi d'échange thermique ; et
- la cavité (198) est remplie d'un liquide et est en liaison d'écoulement via le tube de chauffe (20) avec le corps de refroidissement (21).

3. Dispositif selon l'une ou l'autre des revendications 1 et 2, **caractérisé en ce que** l'on a prévu plusieurs tubes de chauffe (20) qui présentent une zone d'évaporation commune et **en ce qu'**ils sont tous reliés au même corps de refroidissement (2 1 ).

4. Dispositif selon l'une ou l'autre des revendications 1 et 2, **caractérisé en ce que** l'on a prévu plusieurs tubes de chauffe (20) et **en ce qu'**un propre corps de refroidissement (21) est associé à chaque tube de chauffe (20).

5. Dispositif selon l'une des revendications précédentes, **caractérisé en ce que** le corps de refroidissement (21) est agencé à un emplacement auquel sa surface est attaquée par le vent de déplacement d'un véhicule équipé de la machine à combustion interne ou au moins en partie par le flux d'air d'un ventilateur qui refroidit la machine à combustion interne.

6. Dispositif selon l'une ou l'autre des revendications 1 et 2, **caractérisé en ce que** le tube de chauffe (20) est rempli d'un liquide dont la température d'ébullition se trouve quelque peu en dessous de la température critique de l'agent de réduction devant être amené avec la soupape de dosage (15).

7. Dispositif selon l'une ou l'autre des revendications 1 et 6, **caractérisé en ce que** le tube de chauffe (20) est rempli d'eau.

8. Dispositif selon l'une ou l'autre des revendications 1 et 2, **caractérisé en ce que** la zone d'évaporation est réalisée comme bague de refroidissement (197) qui entoure directement la pointe (152) de la soupape de dosage.

9. Dispositif selon l'une ou l'autre des revendications 1 et 2, **caractérisé en ce que** la zone d'évaporation est réalisée comme bague de refroidissement (197) et **en ce qu'**une couche intermédiaire est mise en place entre la bague de refroidissement (197) et la pointe (152) de la soupape de dosage pour améliorer la transmission thermique entre ces pièces.

10. Dispositif selon l'une ou l'autre des revendications 1 et 2, **caractérisé en ce que** le corps de refroidissement (21) est monté sur une tôle écran (23) qui le protège contre la chaleur de rayonnement de la conduite de gaz d'échappement (4) à haute température.

11. Dispositif selon l'une ou l'autre des revendications 1 et 2, **caractérisé en ce que** la soupape de dosage (15) est maintenue dans le dispositif de logement de soupape (19) au moyen d'un dispositif de serrage de manière à empêcher un déplacement en direction axiale et en direction radiale.

12. Dispositif selon l'une ou l'autre des revendications 1 et 2, **caractérisé en ce que** la soupape de dosage (15) est maintenue dans le dispositif de logement de soupape (19) au moyen d'un raccord vissé de manière à empêcher un déplacement en direction axiale et en direction radiale.

13. Dispositif selon l'une ou l'autre des revendications 1 et 2, **caractérisé en ce que** le dispositif de logement de soupape (19) est constitué de matériaux métalliques.

14. Dispositif selon la revendication 1, **caractérisé en ce que** le dispositif de logement de soupape (19) est constitué de matériau céramique.

15. Dispositif selon la revendication 1, **caractérisé en ce que** le dispositif de logement de soupape (19) est constitué au moins partiellement de matière plastique qui résiste à la température.
